# EUROPÄISCHE PATENTANMELDUNG

(11) **EP 1 275 572 A2**
(43) Veröffentlichungstag der Anmeldung: **15.01.2003**
(21) Anmeldenummer: 02015115.5
(22) Anmeldetag: 05.07.2002
(51) Int. Cl.: B62B 3/06

(54) **Flurförderzeugflotte und Verfahren zum Herstellen der Flurförderzeugflotte**

(30) Priorität: 14.07.2001 DE 10134282
(71) Anmelder: Still & Saxby S.à.r.l., 77107 Meaux-Cedex (FR)
(72) Erfinder: Fortin, Dominique, 60160 Montataire (FR); Bimont, Cyril, 60940 St Vaast-Angicourt (FR); Alegre, Jean-Pierre, 60150 Thourotte (FR); Garcia, David, 60500 Chantilly (FR)
(74) Vertreter: Lang, Michael

(57) **Zusammenfassung**

Gegenstand der Erfindung ist eine Flurförderzeugflotte, insbesondere Hubwagenflotte, bei der jedes Flurförderzeug der Flurförderzeugflotte einen Antriebsteil (1) und einen Lastteil (2) aufweist, wobei der Lastteil (2) relativ zu dem Antriebsteil (1) anhebbar ist und der Lastteil (2) mindestens zwei Radarme (3) aufweist, die jeweils mit mindestens einer Lastrolle (7) auf einer Fahrbahn aufstehen, wobei der vertikale Abstand der Lastrollen (7) relativ zu den zugeordneten Radarmen (3) mittels mindestens eines Gestängebauteils einstellbar ist, wobei die Radarme (3) mindestens zweier verschiedener Flurförderzeuge der Flurförderzeugflotte unterschiedliche Abstände (d) aufweisen. Erfindungsgemäß weisen die verschiedenen Flurförderzeuge der Flurförderzeugflotte mindestens ein identisches Gestängebauteil auf, das in den verschiedenen Flurförderzeugen in unterschiedlichen Montagepositionen montiert ist.

## Beschreibung

Die Erfindung betrifft eine Flurförderzeugflotte, insbesondere Hubwagenflotte, bei der jedes Flurförderzeug der Flurförderzeugflotte einen Antriebsteil und einen Lastteil aufweist, wobei der Lastteil relativ zu dem Antriebsteil anhebbar ist und der Lastteil mindestens zwei Radarme aufweist, die jeweils mit mindestens einer Lastrolle auf einer Fahrbahn aufstehen, wobei der vertikale Abstand der Lastrollen relativ zu den zugeordneten Radarmen mittels mindestens eines Gestängebauteils einstellbar ist, wobei die Radarme mindestens zweier verschiedener Flurförderzeuge der Flurförderzeugflotte unterschiedliche Abstände aufweisen.

Ebenfalls betrifft die Erfindung ein Verfahren zum Herstellen einer Flurförderzeugflotte, insbesondere Hubwagenflotte, bei der jedes Flurförderzeug der Flurförderzeugflotte einen Antriebsteil und einen Lastteil aufweist, wobei der Lastteil relativ zu dem Antriebsteil anhebbar ist und der Lastteil mindestens zwei Radarme aufweist, die jeweils mit mindestens einer Lastrolle auf einer Fahrbahn aufstehen, wobei der vertikale Abstand der Lastrollen relativ zu den zugeordneten Radarmen mittels mindestens eines Gestängebauteils einstellbar ist, wobei die Radarme mindestens zweier verschiedener Flurförderzeuge der Flurförderzeugflotte unterschiedliche Abstände aufweisen.

Flurförderzeuge der genannten Art weisen in der Regel einen Antriebsteil und einen dem Antriebsteil gegenüber beweglichen Lastteil auf. Der Lastteil besitzt üblicherweise zwei Radarme, die jeweils über eine Lastrolle auf der Fahrbahn aufstehen. Mit den Radarmen können verschiedenartige Lasten, beispielsweise Paletten oder Gitterboxen, unterfahren und angehoben werden. Dabei kann man zwischen den sogenannten Niederhubwagen, bei denen die Last direkt mit den Radarmen angehoben wird, und sogenannten Hochhubwagen, die eine separate Lastgabel zum Aufnehmen der Lasten besitzen, unterscheiden.

Bei Hubwagen sind die Radarme gewöhnlich fest mit dem Lastteil verbunden, z.B. angeschweißt. Bereits vor der Herstellung eines solchen Flurförderzeugs muss der Abstand der beiden Radarme in seitlicher Richtung festgelegt werden. Der Abstand wird dabei vom Kunden unter Berücksichtigung betrieblicher Belange gewählt. Insbesondere müssen die schmalsten, zur Handhabung vorgesehenen Lasten problemlos unterfahren werden können. Der Hersteller bietet also eine Flurförderzeugflotte an, die dadurch definiert ist, dass für einen bestimmten Flurförderzeugtyp mehrere Varianten mit unterschiedlichen Abständen der Radarme hergestellt werden können. Unterhalb der Radarme befindet sich üblicherweise eine Hebelanordnung aus mehreren Gestängebauteilen, mit welchen das Anheben der Radarme bei einem Anheben des Lastteils automatisch unterstützt wird.

Für den Hersteller stellt sich aufgrund der in Abhängigkeit von dem Bedarf der einzelnen Kunden unterschiedlichen Abstände der Radarme das Problem, dass verschiedenartige Typen von Achsen für die Befestigung der Gestängebauteile am Antriebsteil benötigt werden. Die Gestängebauteile können zur Realisierung der gewünschten Abstände nicht an denselben Lagerstellen der Achse angebracht werden, sondern müssten vielmehr entlang der Achse versetzt werden. Bekannte Flurförderzeuge dieser Art besitzen daher eine Anzahl vorgefertigter Achsen zur Auswahl, aus denen je nach Bedarf eine ausgewählt wird. Diese Art der Herstellung und Montage ist allerdings sehr aufwändig und kostenintensiv.

Der Erfindung liegt daher die Aufgabe zugrunde, eine mit geringem Aufwand herstellbare Flurförderzeugflotte und ein wenig aufwändiges Verfahren zum Herstellen einer Flurförderzeugflotte mit unterschiedlichen Abständen der Radarme zur Verfügung zu stellen.

Diese Aufgabe wird bezüglich der Flurförderzeugflotte erfindungsgemäß dadurch gelöst, dass die verschiedenen Flurförderzeuge der Flurförderzeugflotte mindestens ein identisches Gestängebauteil aufweisen, das in den verschiedenen Flurförderzeugen in unterschiedlichen Montagepositionen montiert ist. Hierdurch ist gewährleistet, dass immer dieselben Bauteile verwendet werden können und auch der Montagevorgang identisch bleibt. Die Erfindung stellt also eine kostensparende und wenig aufwändige Vorrichtung zum Herstellen einer Flurförderzeugflotte dar.

Vorteilhafterweise werden die Radarme des Flurförderzeugs mit einem an dem Antriebsteil geführten Rahmen des Lastteils nicht trennbar verbunden, vorzugsweise angeschweißt. Der Abstand der Radarme wird vom Kunden ausgewählt und die Radarme und Gestängebauteile werden entsprechend dieser Vorgabe montiert. Da es nicht vorgesehen ist, den Abstand der Radarme später wieder verändern zu können, ist eine nicht trennbare Verbindung mit dem Rahmen des Lastteils zweckmäßig.

Weiterhin ist es günstig, wenn die Lastrollen relativ zu den Radarmen in Querrichtung der Radarme nicht bewegbar festgelegt sind. Die Lastrollen werden dem gewählten Abstand der Radarme entsprechend unter diesen angebracht und dienen als deren Auflager.

Gemäß einer zweckmäßigen Weiterbildung der Erfindung sind als Gestängebauteile für jeden Radarm mindestens ein Dreieckshebel, eine kraftübertragende Stange und ein Kniehebel vorgesehen. Diese Bauteile bilden eine Hebelanordnung, die das Anheben des Lastteils bewerkstelligt.

Um die einwandfreie Bewegung der Hebelanordnung zu gewährleisten, ist es vorteilhaft, wenn der Dreieckshebel an einer Lagerstelle des Antriebsteils schwenkbar um eine horizontale Achse gelagert ist, wobei der Dreieckshebel mit der Lagerstelle in mindestens zwei längs der Achse zueinander versetzten Positionen verbindbar ist. Es wird somit eine variable Montage der Dreieckshebel entsprechend des gewählten Abstands der Radarme ermöglicht.

Ebenso ist es zweckmäßig, wenn die Stange an einer Lagerstelle des Dreieckshebels schwenkbar um eine horizontale Achse gelagert ist, wobei die Stange mit der Lagerstelle in mindestens zwei längs der Achse zueinander versetzten Positionen verbindbar ist. Dadurch wird auch eine variable Montage der Stangen entsprechend des gewählten Abstands der Radarme ermöglicht.

Vorteilhafterweise ist auch der Kniehebel an einer Lagerstelle der Stange schwenkbar um eine horizontale Achse gelagert ist, wobei der Kniehebel mit der Lagerstelle in mindestens zwei längs der Achse zueinander versetzten Positionen verbindbar ist. Eine variable Montage der Kniehebel entsprechend des gewählten Abstands der Radarme wird somit ermöglicht.
Zweckmäßig ist es, wenn der Dreieckshebel mit einer Lagerstelle des Antriebsteils und mit dem Rahmen des Lastteils verbunden ist und wenn an der Lagerstelle des Dreieckshebels die Stange gelagert ist. Dadurch ist der Dreieckshebel an seinem einen Ende gelenkig, aber unverschieblich gelagert und andererseits mit den übrigen Gestängebauteilen so verbunden. Die Funktion der Hebelanordnung ist damit gleich wie bei Flurförderzeugen des Standes der Technik.

Es ist ebenso vorteilhaft, wenn der Kniehebel schwenkbar an dem Radarm gelagert ist und an einer Lagerstelle der Stange mit der Stange verbunden ist und wenn die Lastrolle drehbar an dem Kniehebel gelagert ist. Eine Bewegung der Hebelanordnung zum Anheben der Radarme bewirkt durch die dabei stattfindende Drehbewegung des Kniehebels, dass der vertikale Abstand zwischen den Lastrollen und den Radarmen vergrößert wird.

Bezüglich des Verfahrens zum Herstellen einer Flurförderzeugflotte wird die oben genannte Aufgabe ebenfalls dadurch gelöst, dass die verschiedenen Flurförderzeuge der Flurförderzeugflotte mit mindestens einem identischen Gestängebauteil ausgerüstet werden, das in den verschiedenen Flurförderzeugen in unterschiedlichen Montagepositionen montiert wird.

Vorteilhafterweise sind als Gestängebauteile für jeden Radarm mindestens ein Dreieckshebel, eine kraftübertragende Stange und ein Kniehebel vorgesehen.

Zweckmäßig ist es ebenfalls, wenn in Abhängigkeit von dem Abstand der Radarme der Dreieckshebel an einer Lagerstelle des Antriebsteils schwenkbar um eine horizontale Achse in einer von mindestens zwei möglichen Positionen längs der Achse, die Stange an einer Lagerstelle des Dreieckshebels schwenkbar um eine horizontale Achse in einer von mindestens zwei möglichen Positionen längs der Achse und der Kniehebel an einer Lagerstelle der Stange schwenkbar um eine horizontale Achse in einer von mindestens zwei möglichen Positionen längs der Achse montiert werden.

Weitere Vorteile und Einzelheiten der Erfindung werden anhand des in den schematischen Figuren dargestellten Ausführungsbeispiels näher erläutert. Dabei zeigt
- Figur 1: einen Hubwagen einer erfindungsgemäßen Flurförderzeugflotte in Seitenansicht,
- Figur 2: einen Hubwagen einer erfindungsgemäßen Flurförderzeugflotte in Draufsicht,
- Figur 3a, b: eine Anordnung eines Dreieckshebels einer erfindungsgemäßen Flurförderzeugflotte,
- Figur 4a, b: eine Anordnung einer Stange einer erfindungsgemäßen Flurförderzeugflotte,
- Figur 5a, b: eine Anordnung eines Kniehebels einer erfindungsgemäßen Flurförderzeugflotte.

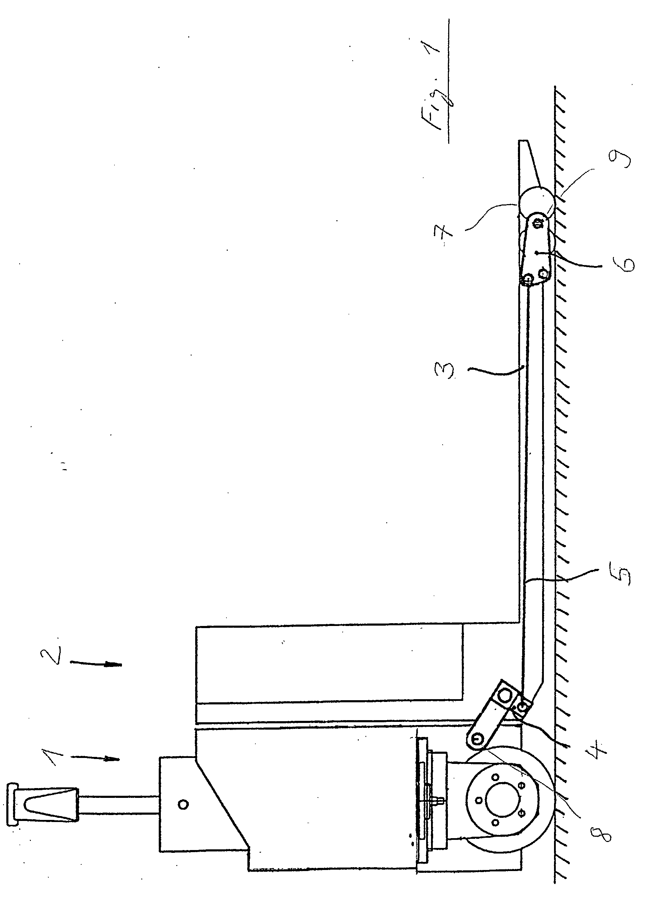

In Figur 1 ist ein Hubwagen in der Seitenansicht dargestellt. Relativ zu einem Antriebsteil 1 in vertikaler Richtung beweglich ist ein Lastteil 2 angeordnet, der bei dem dargestellten Fahrzeug zwei Radarme 3 und eine Hebelanordnung zum Anheben der Radarme 3 aufweist. Der erste Teil dieser an beiden Radarmen 3 vorliegenden Hebelanordnung wird von einem sowohl an dem Antriebsteil 1 als auch an dem Lastteil 2 befestigten Dreieckshebel 4 gebildet. Der dritte Eckpunkt des Dreieckshebels 4 ist mit einer annähernd horizontal angeordneten, kraftübertragenden Stange 5 gelenkig verbunden, die wiederum an ihrem anderen Ende an einen Kniehebel 6 gekoppelt ist. Der Kniehebel 6 ist zudem an dem Radarm 3 gelagert, während ein weiteres Auflager von den Lastrollen 7 gebildet wird.

Mit Hilfe eines hier nicht dargestellten Hubzylinders wird der Lastteil 2 angehoben. Beim damit einhergehenden zwangsweisen Drehen des Dreieckshebels 4 um eine horizontale Achse 8 wird aufgrund seiner Verbindung mit der schubstarren Stange 5 auch der Kniehebel 6 um eine horizontale Achse 9 nach oben geschwenkt, und die Radarme 3 erfahren somit einen Parallelhub nach oben.

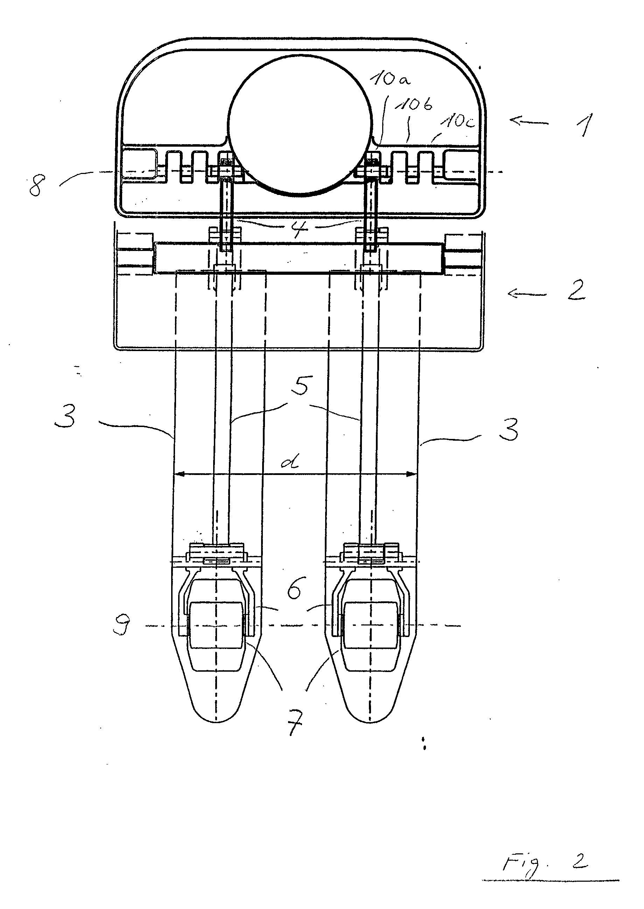

In Figur 2 ist ein Hubwagen in der Draufsicht dargestellt. Man erkennt wiederum den Antriebsteil 1 und den Lastteil 2 mit seinen Radarmen 3 sowie die aus dem Dreieckshebel 4, der Stange 5 und dem Kniehebel 6 bestehende Hebelanordnung, die sich auf den Lastrollen 7 abstützt.

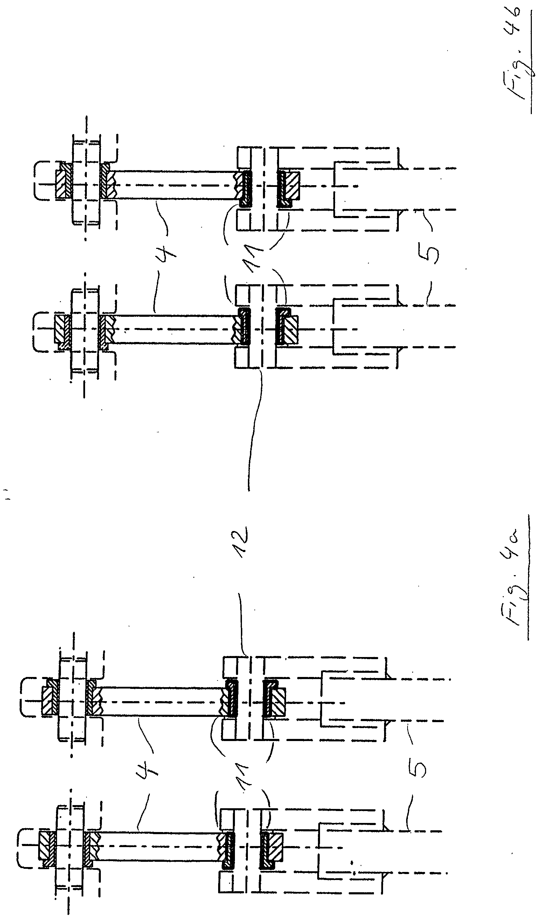

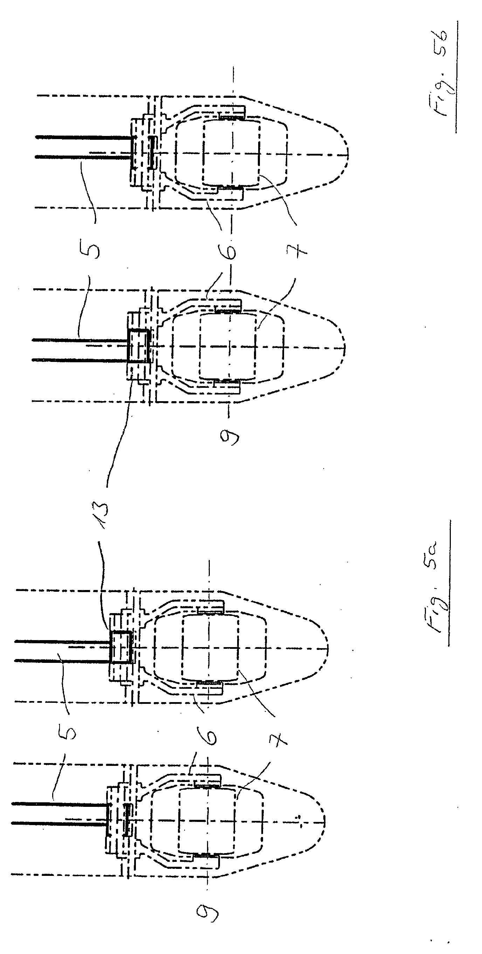

Die Radarme 3 werden so an den Lastteil 2 angeschweißt, dass ihre Außenkanten einen Abstand d zueinander besitzen. Die Anordnung der Bauteile der Hebelanordnung muss ebenfalls an den gewünschten Abstand d angepasst werden. Hierzu können im vorliegenden Ausführungsbeispiel zunächst die Dreieckshebel 4 in drei verschiedenen, längs der Achse 8 am Antriebsteil 1 zueinander versetzen Positionen 10a, b oder c befestigt werden. Das andere Ende der Dreieckshebel 4 wird mit einem Rahmenteil des Lastteils 2 gelenkig so verbunden, dass sich die Dreieckshebel 4 in einem rechten Winkel zu der Achse 8 befinden. Soll beispielsweise, wie hier gezeigt, der kleinste Abstand d erreicht werden, muss der Dreieckshebel 4 jeweils an der sich am weitesten innen befindlichen Lagerstelle 10a montiert werden. Zur feineren Einstellung des Abstands d können die Stangen 5, die an den Dreieckshebeln 4 angeschlossen sind, und die an den Stangen 5 befestigten Kniehebel 6 jeweils auch in zwei verschiedenen Positionen angebracht werden, wie in den Figuren 4a und 4b sowie 5a und 5b zu erkennen ist. Es ergeben sich somit zwölf verschiedene mögliche Abstände d für die Radarme 3, die allesamt mit den gleichen Bauteilen realisiert werden können.

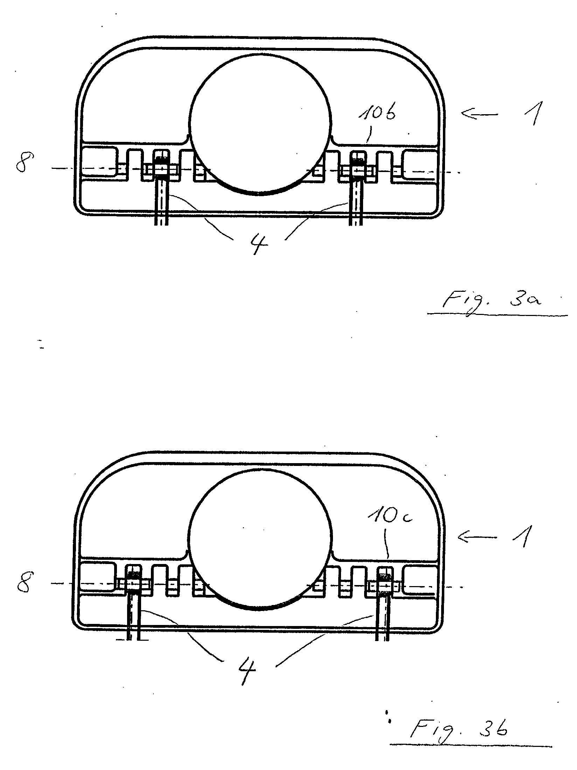

In den Figuren 3a und 3b ist der Hubwagen gemäß Figur 2 mit den Dreieckshebeln 4 in ihren übrigen möglichen Montagepositionen dargestellt. Figur 3b zeigt die an der bezüglich der Achse 8 mittleren Lagerstelle 10b montierten Dreieckshebel 4, während in Figur 3b die gleiche Anordnung mit der Befestigung an der äußersten Lagerstelle 10c abgebildet ist.

In den Figuren 4a und 4b ist die Montage der Stangen 5 an den Dreieckshebeln 4 im Schnitt dargestellt. Die beiden Bauteile jedes Radarms 3 werden mittels eines Bolzens 12 miteinander verbunden. Der Bolzen 12 wird zum Erreichen einer Gelenkwirkung von einer mit einem Bund versehenen Buchse 11 umgeben. Daneben hat der Bund der Buchse 11 auch die Aufgabe, zwei verschiedene Positionen für die Befestigung der Stangen 5 bereitzustellen. Betrachtet man in den Figuren jeweils den linken Radarm 3, so kann die Buchse 11 entweder mit dem Bund nach links oder aber nach rechts zeigend befestigt werden. Zeigt der Bund nach links, dann wird die Stange 5 nach innen gerückt und der Abstand zwischen den beiden Stangen 5 wird geringer. Im Falle eines nach rechts zeigenden Bundes, wird die Stange 5 nach außen gerückt und somit auch der Abstand zwischen den beiden Stangen 5 vergrößert. Es können also für jede der drei verschiedenen Lagerstellen 10a, b und c zwei Montagepositionen für die Stangen 5 gewählt werden, wodurch bereits sechs verschiedene Abstände d der Radarme 3 zur Verfügung stehen.
Ähnlich funktioniert die in den Figuren 5a und 5b im Schnitt dargestellte Verbindung der Stangen 5 mit den Kniehebeln 6. Der Kniehebel 6 ist einerseits an der Stange 5 gelenkig befestigt und andererseits drehbar um eine Achse 9 an der Lastrolle 7 gelagert. Außerdem besteht noch eine hier nicht dargestellte, gelenkige Verbindung mit dem Radarm 3. Um wieder zwei verschiedene Positionen der Kniehebel 6 zu ermöglichen, sind die Kniehebel 6 jeweils mit einem Verbindungselement 13 fest verbunden. Das Verbindungselement 13 wird entweder mit seiner linken oder rechten Seite bündig an die Stange 5 angeschlossen. Bei den in den Zeichnungen jeweils linken Radarmen 3 bewirkt ein bündiger Anschluss an die linke vertikale Begrenzung der Stange 5 einen geringeren Abstand der Kniehebel 6 zueinander, während ein bündiger Anschluss an die rechte vertikale Begrenzung der Stange 5 einen größeren Abstand der Kniehebel 6 zur Folge hat. Die oben genannten, aufgrund der variablen Anordnung der Dreieckshebel 4 und der Stangen 5 zustande gekommenen, sechs möglichen Abständen d können nun noch einmal verdoppelt werden, da auch für die letzten Gestängebauteile, die Kniehebel 6, zwei Lagerpositionen vorhanden sind.

Insgesamt stehen zwölf mögliche Abstände d für die Montage der Radarme 3 zur Verfügung, aus denen der Kunde auswählen kann. Entsprechend des gewählten Abstandes d werden die Bauteile der Hebelanordnung in ihren verschiedenen Positionen befestigt. Dabei werden immer dieselben Bauteile verwendet und auch der Montagevorgang bleibt identisch. Die vorliegende Erfindung bietet also eine kostensparende und wenig aufwändige Vorrichtung und ein ebensolches Verfahren zum Herstellen einer Flurförderzeugflotte an.

## Patentansprüche

1. Flurförderzeugflotte, insbesondere Hubwagenflotte, bei der jedes Flurförderzeug der Flurförderzeugflotte einen Antriebsteil (1) und einen Lastteil (2) aufweist, wobei der Lastteil (2) relativ zu dem Antriebsteil (1) anhebbar ist und der Lastteil (2) mindestens zwei Radarme (3) aufweist, die jeweils mit mindestens einer Lastrolle (7) auf einer Fahrbahn aufstehen, wobei der vertikale Abstand der Lastrollen (7) relativ zu den zugeordneten Radarmen (3) mittels mindestens eines Gestängebauteils einstellbar ist, wobei die Radarme (3) mindestens zweier verschiedener Flurförderzeuge der Flurförderzeugflotte unterschiedliche Abstände aufweisen, **dadurch gekennzeichnet, dass** die verschiedenen Flurförderzeuge der Flurförderzeugflotte mindestens ein identisches Gestängebauteil aufweisen, das in den verschiedenen Flurförderzeugen in unterschiedlichen Montagepositionen montiert ist.

2. Flurförderzeugflotte nach Anspruch 1, **dadurch gekennzeichnet, dass** die Radarme (3) mit einem an dem Antriebsteil (1) geführten Rahmen des Lastteils (2) nicht trennbar verbunden sind, vorzugsweise angeschweißt sind.

3. Flurförderzeugflotte nach Anspruch 1 oder 2, **dadurch gekennzeichnet, dass** die Lastrollen (7) relativ zu den Radarmen (3) in Querrichtung der Radarme (3) nicht bewegbar festgelegt sind.

4. Flurförderzeugflotte nach einem der Ansprüche 1 bis 3, **dadurch gekennzeichnet, dass** als Gestängebauteile für jeden Radarm (3) mindestens ein Dreieckshebel (4), eine kraftübertragende Stange (5) und ein Kniehebel (6) vorgesehen sind.

5. Flurförderzeugflotte nach Anspruch 4, **dadurch gekennzeichnet, dass** der Dreieckshebel (4) an einer Lagerstelle (10) des Antriebsteils (1) schwenkbar um eine horizontale Achse (8) gelagert ist, wobei der Dreieckshebel (4) mit der Lagerstelle (10) in mindestens zwei längs der Achse (8) zueinander versetzten Positionen verbindbar ist.

6. Flurförderzeugflotte nach Anspruch 4 oder 5, **dadurch gekennzeichnet, dass** die Stange (5) an einer Lagerstelle des Dreieckshebels (4) schwenkbar um eine horizontale Achse gelagert ist, wobei die Stange (5) mit der Lagerstelle in mindestens zwei längs der Achse zueinander versetzten Positionen verbindbar ist.

7. Flurförderzeugflotte nach einem der Ansprüche 4 bis 6, **dadurch gekennzeichnet, dass** der Kniehebel (6) an einer Lagerstelle der Stange (5) schwenkbar um eine horizontale Achse gelagert ist, wobei der Kniehebel (6) mit der Lagerstelle in mindestens zwei längs der Achse zueinander versetzten Positionen verbindbar ist.

8. Flurförderzeugflotte nach einem der Ansprüche 4 bis 7, **dadurch gekennzeichnet, dass** der Dreieckshebel (4) mit einer Lagerstelle (10) des Antriebsteils (1) verbunden ist und mit dem Rahmen des Lastteils (2) verbunden ist und dass an der Lagerstelle des Dreieckshebels (4) die Stange (5) gelagert ist.

9. Flurförderzeugflotte nach einem der Ansprüche 4 bis 8, **dadurch gekennzeichnet, dass** der Kniehebel (6) schwenkbar an dem Radarm (3) gelagert ist und an einer Lagerstelle der Stange (5) mit der Stange (5) verbunden ist und dass die Lastrolle (7) drehbar an dem Kniehebel (6) gelagert ist.

10. Verfahren zum Herstellen einer Flurförderzeugflotte, insbesondere Hubwagenflotte, bei der jedes Flurförderzeug der Flurförderzeugflotte einen Antriebsteil (1) und einen Lastteil (2) aufweist, wobei der Lastteil (2) relativ zu dem Antriebsteil (1) anhebbar ist und der Lastteil (2) mindestens zwei Radarme (3) aufweist, die jeweils mit mindestens einer Lastrolle (7) auf einer Fahrbahn aufstehen, wobei der vertikale Abstand der Lastrollen (7) relativ zu den zugeordneten Radarmen (3) mittels mindestens eines Gestängebauteils einstellbar ist, wobei die Radarme (3) mindestens zweier verschiedener Flurförderzeuge der Flurförderzeugflotte unterschiedliche Abstände aufweisen, **dadurch gekennzeichnet, dass** die verschiedenen Flurförderzeuge der Flurförderzeugflotte mit mindestens einem identischen Gestängebauteil ausgerüstet werden, das in den verschiedenen Flurförderzeugen in unterschiedlichen Montagepositionen montiert wird.

11. Verfahren nach Anspruch 10, **dadurch gekennzeichnet, dass** als Gestängebauteile für jeden Radarm (3) mindestens ein Dreieckshebel (4), eine kraftübertragende Stange (5) und ein Kniehebel (6) vorgesehen sind.

12. Verfahren nach Anspruch 10 oder 11, **dadurch gekennzeichnet, dass** in Abhängigkeit von dem Abstand der Radarme (3) der Dreieckshebel (4) an einer Lagerstelle (10) des Antriebsteils (1) schwenkbar um eine horizontale Achse (8) in einer von mindestens zwei möglichen Positionen längs der Achse (8) montiert wird.

13. Verfahren nach einem der Ansprüche 10 bis 12, **dadurch gekennzeichnet, dass** in Abhängigkeit von dem Abstand der Radarme (3) die Stange (5) an einer Lagerstelle des Dreieckshebels (4) schwenkbar um eine horizontale Achse in einer von mindestens zwei möglichen Positionen längs der Achse montiert wird.

14. Verfahren nach einem der Ansprüche 10 bis 13, **dadurch gekennzeichnet, dass** in Abhängigkeit von dem Abstand der Radarme (3) der Kniehebel (6) an einer Lagerstelle der Stange (5) schwenkbar um eine horizontale Achse in einer von mindestens zwei möglichen Positionen längs der Achse montiert wird.
